# EUROPÄISCHE PATENTSCHRIFT

(11) **EP 3 365 703 B1**
(45) Veröffentlichungstag und Bekanntmachung des Hinweises auf die Patenterteilung: **17.04.2019**
(21) Anmeldenummer: 16806129.9
(22) Anmeldetag: 07.12.2016
(51) Int. Cl.: G01S 19/14, G01S 19/39

(54) **SATELLITENGESTÜTZTE ERMITTLUNG EINES KRAFTFAHRZEUGS IN EINEM ÜBERDACHTEN BEREICH**
SATELLITE-ASSISTED DETERMINATION OF A MOTOR VEHICLE IN A COVERED AREA
DÉTERMINATION ASSISTÉE PAR SATELLITE DE LA POSITION D'UN VÉHICULE AUTOMOBILE DANS UNE ZONE COUVERTE

(30) Priorität: 11.12.2015 DE 102015016045
(43) Veröffentlichungstag der Anmeldung: 29.08.2018
(73) Patentinhaber: Audi AG, 85045 Ingolstadt (DE)
(72) Erfinder: SCHULLER, Florian, 85737 Ismaning (DE); HAUBNER, Florian, 97348 Willanzheim (DE)
(86) Internationale Anmeldenummer: PCT/EP2016/079975
(87) Internationale Veröffentlichungsnummer: WO 2017/097794

(56) Entgegenhaltungen:
- EP-A2- 0 429 783
- WO-A1-00/49680
- DE-A1-102007 020 434
- KR-A- 20130 006 019
- US-A1- 2013 332 064
- US-A1- 2016 377 731

## Beschreibung

Die Erfindung betrifft ein Positionsbestimmungssystem für ein Kraftfahrzeug zur Ermittlung, ob sich das Kraftfahrzeug in einem durch ein Deckenelement eines Bauwerks überdachten Bereich befindet, gemäß dem Oberbegriff des Patentanspruchs 1. Weiterhin betrifft die Erfindung ein Kraftfahrzeug mit einem derartigen Positionsbestimmungssystem. Überdies betrifft die Erfindung ein Verfahren gemäß dem Oberbegriff des Patentanspruchs 10.

Bisher werden globale Navigationssatellitensysteme (Global Navigation Satellite System, GNSS) vor allem zur Positionsbestimmung für Navigationszwecke eingesetzt. Grundsätzlich basieren solche Systeme auf der Laufzeitmessung zu verschiedenen Satelliten. Mindestens vier Satelliten müssen zu jedem Zeitpunkt sichtbar sein, um sicher eine Position eindeutig bestimmen zu können. Dabei kann der Empfänger aus der Position des Satelliten und den Signallaufzeiten seine eigene Position bestimmen.

Zur Detektion von Decken, d.h. Überdachungen, werden in der Regel abstandgebende Sensoren verwendet, die nach oben orientiert sind und somit direkt feststellen können, ob sich innerhalb der Reichweite ein Hindernis oberhalb des Fahrzeugs befindet, das als Decke interpretiert werden kann. Eine solche Information kann beispielsweise dazu verwendet werden, einen mittels eines Temperatursensors gewonnenen Umgebungstemperaturwert hinsichtlich seines Gültigkeitsbereichs zu beurteilen und möglicherweise bei einem Durchfahren eines Tunnels angetroffene mildere Umgebungstemperaturen nicht für eine Reichweitenprädiktion durch den Bordcomputer zugrunde zu legen.

Das Erkennen einer nach oben abgedeckten Fahrstrecke kann für vielerlei Komfortfunktionen verwendet werden. In diesem Zusammenhang ist aus der DE 10 2008 056 907 A1 eine Steuereinrichtung für ein Fahrzeug mit einem Navigationssystem zum Erfassen einer aktuellen Position des Fahrzeugs und mit einer mit dem Navigationssystem gekoppelten Steuereinheit bekannt, mittels welcher wenigstens eine Fahrzeugkomponente in Abhängigkeit von der aktuellen Position des Fahrzeugs ansteuerbar ist, wobei wenigstens eine globale Position des Fahrzeugs durch einen Benutzer vordefinierbar ist, in welcher die wenigstens eine Fahrzeugkomponente mittels der Steuereinheit ansteuerbar ist. Gemäß einer offenbarten Ausführungsform kann vorgesehen sein, dass ein bevorstehendes Befahren einer nach oben abgedeckten Fahrstrecke, wie beispielsweise Tunnels, mittels des Navigationssystems erkennbar ist und ein dieses Befahren signalisierendes Informationssignal von dem Navigationssystem an die Steuereinheit übermittelbar ist, in dessen Abhängigkeit die wenigstens eine Fahrzeugkomponente mittels der Steuereinheit ansteuerbar ist.

Die WO 00/49680 A1 beschreibt eine Rückspiegelanordnung, in der eine Mikrowellenantenne angebracht ist, um Übertragungen von einem oder mehreren Satelliten durch die vordere Windschutzscheibe des Fahrzeugs zu empfangen. Anhand der Signalstärken der Satellitensignale wird ermittelt, welche Teile des Himmels aus Sicht des Empfängers abgeschattet sind. Nimmt der abgeschattete Anteil des Himmels mehr und mehr zu, kann dies auf eine sich nähernde Überdachung durch ein Deckenelement eines Bauwerks hindeuten.

Aktuell verfügen viele Fahrzeuge über keine Sensoren, die nach oben ausgerichtet sind. Somit kann die Decke bzw. Überdachung nicht zuverlässig detektiert werden.

Zusätzliche Sensoren, die nur dazu vorhanden sind, die Decke zu detektieren, verursachen mehr Kosten und bringen meist nur in wenigen Situationen Vorteile. Wird auf die Sensoren verzichtet, kann keine Decke erkannt werden, ein Garagenparkplatz also auch nach dem Einparkvorgang nicht validiert werden. Eine solche Funktion wird beispielsweise für das selbsttätige Parken des Fahrzeugs in einer Garage benötigt. Hierbei kann ein Fahrzeugnutzer das Fahrzeug verlassen und die Garagenparkfunktion des Fahrzeugs starten. Das Fahrzeug kann sich dann selbst innerhalb eines begrenzten Umkreises, dessen Ausdehnung vorgebbar sein kann, die Garage suchen und in der Garage parken. Aufgrund fehlender Sensoren in vielen derzeit verfügbaren Fahrzeugen, die den Erfolg des automatischen Einparkvorgangs in der Garage validieren könnten, indem sie eine Information "Decke oberhalb von Fahrzeug" bereitstellen, kann ein Fehlschlagen des Parkvorgangs also nicht unbedingt detektiert werden. Es könnte beispielsweise sein, dass das Fahrzeug einfach zwischen zwei Häusern zum Stehen kommt, da die mit der derzeit üblicherweise verfügbaren Fahrzeugsensorik erfassbare Kontur der Häuser derjenigen einer Garage ähnelt. Überdies können herkömmliche abstandgebende Sensoren regelmäßig Fehldetektionen liefern, wenn das Fahrzeug beispielsweise unter einem Baum geparkt wird. Wenn nur wenige Sensoren vorhanden sind, können viele fälschlicherweise als Decke erkannte Objekte detektiert werden.

Weiterhin ist aus der DE 10 2007 020 434 A1 ein Verfahren zum Betrieb einer Einrichtung, insbesondere einer Navigationseinrichtung für ein Kraftfahrzeug bekannt, wobei die Einrichtung eine Prozessoreinrichtung, eine Signalempfangseinheit zum Empfang von Positionssignalen, insbesondere GPS-Signalen, eine Wegenetzdatenbank, die auch Positionsdaten über Tunnel (Tunnelattribute) enthält, eine Positionsermittlungseinheit, die die aktuelle Position des Fahrzeugs bestimmt, eine Anzeigeeinrichtung und eine Displaysteuerung zur Steuerung der Einstellungen der Anzeigeeinrichtung, insbesondere zur Regulierung der Helligkeit und/oder eines Farbschemas der Anzeigeeinrichtung, umfasst. Die Displaysteuerung kann die Einstellung der Anzeigeeinrichtung beim Durchfahren eines Tunnels (Tunnelmodus) verändern. Das Verfahren beinhaltet die Schritte Ermittlung der Fahrzeugposition unter Berücksichtigung der empfangenen Positionssignale und selbsttätiges Aktivieren des Tunnelmodus der Anzeigeeinrichtung durch die Displaysteuerung sofort oder zeitverzögert, wenn die ermittelte Fahrzeugposition ein Tunnelattribut aufweist und die empfangenen Positionssignale eine vorgegebene Signalqualität unterschreiten. Somit kann ein bereits in vielen Fahrzeugen vorhandener GNSS-Empfänger dazu verwendet werden, Decken bzw. überdachte Bereiche bzw. die Einfahrt/Ausfahrt in diese zu detektieren.

Dieses Verfahren hat jedoch den Nachteil, dass es von einer vorhandenen Wegenetzdatenbank abhängig ist und nur für entsprechend ausgedehnte Bauwerke anwendbar ist wie beispielsweise Tunnels, bei denen das Abreißen des GPS-Signals und die damit verbundene Unterschreitung der vorgegebenen Signalqualität - wie in der DE 10 2007 020 434 A1 behauptet wird - zur sicheren Identifikation der Einfahrt in einen Tunnel sehr geeignet sind.

In diesem Zusammenhang ist für die Bestimmung einer Position eines Fahrzeugs bei abgeschirmten GNSS-Signalen beispielsweise in einem Parkhaus aus der DE 10 2012 223 970 A1 ein Verfahren bekannt zum Bestimmen von Initialdaten für die Bestimmung von Lagedaten eines Fahrzeugs basierend auf Fahrdynamikdaten, umfassend Zuordnen eines bestimmten Umgebungszustands an einer bestimmten Position des Fahrzeugs, Erfassen eines Umgebungszustands, und Verwenden der bestimmten Position als Initialdaten, wenn eine Gegenüberstellung des erfassten Umgebungszustands und des bestimmten Umgebungszustands einer vorbestimmten Bestimmung genügt.

Es ist Aufgabe der vorliegenden Erfindung, eine Positionsbestimmungssystem für ein Kraftfahrzeug, ein Kraftfahrzeug sowie ein Verfahren bereitzustellen, mit dem auf vielfältig einsetzbare Weise ermittelt werden kann, ob sich ein Kraftfahrzeug in einem durch ein Deckenelement eines Bauwerks überdachten Bereich befindet.

Diese Aufgabe wird gelöst durch ein Positionsbestimmungssystem mit den Merkmalen des Patentanspruchs 1, ein Kraftfahrzeug mit den Merkmalen des Patentanspruchs 8 sowie durch ein Verfahren mit den Merkmalen des Patentanspruchs 10. Vorteilhafte Weiterbildungen der vorliegenden Erfindung sind Gegenstand der abhängigen Ansprüche.

Die Erfindung geht aus von einem Positionsbestimmungssystem für ein Kraftfahrzeug zur Ermittlung, ob sich das Kraftfahrzeug in einem durch ein Deckenelement eines Bauwerks überdachten Bereich befindet, umfassend eine Empfangseinheit, welche dazu ausgelegt ist, Navigations-Signale einer Mehrzahl von Satelliten eines oder mehrerer globaler Navigationssatellitensysteme zu empfangen, und eine zeitliche Veränderung der Signalstärke der jeweiligen Navigations-Signale zu erfassen. Dabei ist eine Auswerteeinheit des Positionsbestimmungssystems dazu ausgelegt, Sichtlinien von dem Kraftfahrzeug zu den jeweiligen Satelliten, deren Navigations-Signale empfangen wurden, zu ermitteln, die zeitliche Veränderung der Signalstärke der jeweiligen Navigations-Signale in Bezug auf die jeweils ermittelte Sichtlinie auszuwerten, und ein Einfahren des Kraftfahrzeugs in den überdachten Bereich durch Korrelation einer Fahrbewegung des Kraftfahrzeugs mit den jeweiligen Sichtlinien zu ermitteln.

Die Auswerteeinheit ist dazu ausgelegt, in Abhängigkeit von den ermittelten Sichtlinien jeden der empfangenen Satelliten jeweils einer Zone aus zumindest einer ersten Zone, einer zweiten Zone und einer dritten Zone zuzuordnen und das Einfahren in das Bauwerk zu erkennen, wenn zunächst die Signalstärke der jeweiligen Navigations-Signale der der ersten Zone zugeordneten Satelliten abnimmt und im weiteren Verlauf die Signalstärke der jeweiligen Navigations-Signale der der zweiten Zone zugeordneten Satelliten abnimmt.

Bei dem Kraftfahrzeug kann es sich um ein Fahrzeug mit Verbrennungsmotor und/oder Elektromotor handeln, insbesondere um ein Elektrofahrzeug oder ein Hybridfahrzeug. Das Bauwerk kann beispielsweise durch einen Tunnel, eine Garage oder ein Parkhaus gegeben sein. Das Deckenelement kann beispielsweise aus Stahlbeton gebildet sein. Bei den Satelliten kann es sich um beliebige Satelliten aktuell verfügbarer und zukünftiger globaler Navigationssatellitensysteme wie GPS (global positioning system) der Vereinigten Staaten von Amerika, GLONASS (global navigation satellite system) der Russischen Föderation, Galileo der Europäischen Union oder Beidou der Volksrepubilk China handeln.

Gemäß der Erfindung kann vorgesehen sein, dass die Empfangseinheit dazu ausgelegt ist, die Navigations-Signale unterschiedlicher Satelliten von verschiedenen globalen Navigationssystemen zu empfangen, und die Auswerteeinheit dazu ausgelegt ist, zu allen empfangenen Navigations-Signalen die zugehörigen Sichtlinien zu ermitteln. Unter Sichtlinie wird hierbei die Verbindungslinie zwischen einer Antenne der Empfangseinheit und einer Sendeantenne des jeweiligen Satelliten verstanden.

Der Erfindung liegt die Erkenntnis zugrunde, dass derzeit verfügbare gattungsgemäße Positionsbestimmungssysteme für ein Kraftfahrzeug die durch ein globales Navigationssatellitensystem bereitgestellten Navigations-Signale nur teilweise nutzen, und weitergehende Nutzungsmöglichkeiten gerade für den Einsatz in einem Kraftfahrzeug durch eine entsprechende Auswertung der Navigations-Signale erzielbar sind. Ein Sensor, nämlich die Empfangseinheit beispielsweise in Form eines GPS-Empfängers, der ohnehin bereits in vielen Fahrzeugen eingesetzt wird, kann somit weitere Informationen zur Verfügung stellen, die neben dem Garagenparken auch noch für eine Tunnelerkennung bzw. zur allgemeinen Detektion hilfreich wären. Ein zugehöriges Verfahren kann über eine Erweiterung der Software umgesetzt werden, zusätzliche Hardware ist dazu nicht zwingend erforderlich. Somit kann vorgesehen sein, dass die Auswerteeinheit als Software-Modul in einem vorhandenen GNSS-Gerät implementiert ist. Somit kann der bereits in vielen Fahrzeugen vorhandene GNSS-Empfänger dazu verwendet werden, Decken bzw. überdachte Bereiche bzw. die Einfahrt/Ausfahrt in diese zu detektieren.

Dazu kann vorgesehen sein, dass alle sichtbaren Satelliten anhand deren Orbit-Daten getrackt werden und regelmäßig die Sichtlinien zu den Satelliten berechnet werden. Über kurze Zeiträume kann die Position der Satelliten aufgrund der großen Entfernung und der Umlaufzeit von ca. zwölf Stunden als konstant angenommen werden, da für diesen Anwendungsfall keine hochgenauen Daten notwendig sind. Sobald ein Satellit nicht mehr verfügbar ist oder die Signalstärke des zugehörigen Navigations-Signals hinreichend abgenommen hat, kann der Grund dafür geschätzt werden. Mögliche Gründe sind beispielsweise ein Verschwinden unter dem Sichthorizont, eine Abschattung durch Gebäude oder auch eine Decke, welche die Verbindung zum Satelliten beeinträchtigt. Im Unterschied zu einer aus dem Stand der Technik bekannten Auswertung lediglich der Signalqualität der verfügbaren Navigations-Signale gegebenenfalls unter Einbeziehung der Anzahl der empfangbaren Satelliten, kann durch die Korrelation der Fahrbewegung des Kraftfahrzeugs mit den jeweiligen Sichtlinien das Einfahren des Kraftfahrzeugs in den überdachten Bereich mit einer höheren Genauigkeit ermittelt werden. Selbstverständlich kann auch das Ausfahren des Kraftfahrzeugs aus dem überdachten Bereich mit einer entsprechenden hohen Genauigkeit ermittelt werden, wenn die Sichtlinien zur Verfügung stehen, beispielsweise in Folge einer Ermittlung vor der Einfahrt in den überdachten Bereich oder mittels Bereitstellung auf einem anderen Weg, beispielsweise über das GSM-Mobilfunknetz in dem sogenannten "Assisted Global Positioning System" (A-GPS). Insbesondere kann auf diesem Wege beispielsweise der sogenannte Almanach übermittelt werden.

Gemäß einer vorteilhaften Weiterbildung ist die Auswerteeinheit dazu ausgelegt, jeweils einen Azimutwinkel der Position des jeweiligen Satelliten in Bezug auf das Kraftfahrzeug zu ermitteln, und zur Korrelation der Fahrbewegung mit den jeweiligen Sichtlinien einen jeweiligen Differenzwinkel zwischen dem jeweiligen Azimutwinkel und einem Fahr-Azimutwinkel zu ermitteln, welcher mit der Richtung der Längsachse des Kraftfahrzeugs und/oder der Richtung einer Tangente an eine durch die Fahrbewegung gebildete Bahnkurve korreliert ist. Ein derartiger Differenzwinkel ist insbesondere vorzeichenlos ausgebildet, das heißt, es wird nur der Betrag des Differenzwinkels betrachtet und ausgewertet. Die Auswerteeinheit kann des Weiteren dazu ausgelegt sein die Auswertung in Abhängigkeit des Differenzwinkels vorzunehmen, mit anderen Worten kann die Auswerteeinheit dazu ausgelegt sein, die zeitliche Veränderung der Signalstärke der jeweiligen Navigations-Signale als Funktion des zugehörigen Differenzwinkels auszuwerten und ein Einfahren des Kraftfahrzeugs in einen überdachten Bereich dann zu erkennen, wenn die zeitliche Veränderung der Signalstärke zunächst bei kleinen Differenzwinkeln erfasst wird und sich im weiteren Verlauf zu größeren Differenzwinkeln hin verschiebt. Somit wird eine zeitliche Abfolge der Signalreduktion in Abhängigkeit von dem Differenzwinkel zur Ermittlung des Einfahrens des Kraftfahrzeugs in den überdachten Bereich analysiert.

Der Azimutwinkel kann fest auf ein Geo-Koordinatensystem bezogen sein, beispielsweise als sogenannter Südazimut oder als sogenannter Nordazimut. Das hat den Vorteil, dass jeweils nur die Azimutwinkel der Satelliten bestimmt werden müssen und zusätzlich ein auf das Geo-Koordinatensystem bezogener Azimutwinkel der Richtung der Fahrzeuglängsachse bzw. der Richtung der Tangente an eine durch die Fahrbewegung gebildete Bahnkurve. Die entsprechenden Differenzwinkel ergeben sich dann jeweils aus der betragsmäßigen Differenz zwischen dem jeweiligen Azimutwinkel und dem Fahr-Azimutwinkel. Ebenso kann selbstverständlich auch vorgesehen sein, dass der Azimutwinkel der Satelliten jeweils auf das Fahrzeug bezogen ist und somit ein Azimutwinkel von 0° und/oder 360° eine Satellitenposition kennzeichnet, bei welcher der betreffende Satellit in Richtung der Fahrbewegung des Kraftfahrzeugs genau voraussteht. In diesem Fall ist statt eines einzigen Azimut-Winkels, nämlich dem Fahr-Azimutwinkel, jeder der jeweiligen Azimutwinkel der Satelliten nachzuführen, was einen programmtechnischen Mehraufwand für die Auswerteeinheit bedeuten kann. Die Wahl des Bezugssystems hat jedoch keinerlei Einfluss auf die Anwendbarkeit der vorliegenden Erfindung.

Gemäß einer weiteren vorteilhaften Ausführungsform ist die Auswerteeinheit dazu ausgelegt, das Einfahren des Kraftfahrzeugs in den überdachten Bereich zu erkennen, wenn eine Abnahme der Signalstärke eines Satelliten, welcher sich in Bezug auf die Position des Kraftfahrzeugs auf der Erdoberfläche in der Nähe des Zenits, bevorzugt innerhalb eines kegelförmigen Bereichs mit einem halben Öffnungswinkel von 30° rund um den Zenit herum, insbesondere mit einem halben Öffnungswinkel von 20°, befindet, um einen vorgebbaren Faktor erfasst wird. Es können somit entscheidend diejenigen Satelliten zur Erhöhung der Genauigkeit der Detektion von Decken beitragen, die in der Nähe des Zenit über dem Kraftfahrzeug stehen. Wird die Verbindung zu einem solchen Satelliten unterbrochen oder die Signalstärke stark beeinflusst, ist die Wahrscheinlichkeit für eine Decke über dem Kraftfahrzeug hoch. Ein nahezu senkrecht über dem Kraftfahrzeug stehender Satellit ermöglicht somit eine sehr genaue Detektion einer Decke über dem Fahrzeug, welche das entsprechende Navigations-Signal in dem überdachten Bereich abschattet, aufgrund der sehr steilen Sichtlinie, welche im Idealfall im Winkel von 90°, also lotrecht, zu der Erdoberfläche steht, und somit praktisch eine nahezu senkrechte Projektion des Signalschattens, welcher durch das Deckenelement bewirkt wird, auf das Kraftfahrzeug erfolgt.

Als halber Öffnungswinkel ist hierbei derjenige Winkel zu verstehen, der zwischen dem Zenit und einer beliebigen den kegelförmigen Bereich begrenzenden Halbgerade, welche bei dem Kraftfahrzeug beginnt, eingeschlossen wird.

Gemäß einer weiteren vorteilhaften Ausführungsform weist das Positionsbestimmungssystem eine Vorhersageeinheit auf, welche dazu ausgelegt ist, in Abhängigkeit von einer vorgebbaren Zielpose innerhalb des Bauwerks, insbesondere einer Garage, einer Abnahme der Signalstärke der jeweiligen Navigations-Signale an der Zielpose in Bezug auf die Signalstärke der jeweiligen Navigations-Signale unmittelbar vor dem Beginn der Ansteuerung der Zielpose durch das Kraftfahrzeug vorherzusagen. Unter Zielpose wird hierbei eine Kombination aus Zielposition und Orientierung des Kraftfahrzeugs an der Zielposition verstanden. Insbesondere kann es sich um die selbsttätige Ansteuerung der Zielpose durch das Kraftfahrzeug handeln, welches ein automatisiertes Einparken unterstützt. In Kombination mit dem Einparkvorgang kann somit bereits vor dem Einparkvorgang aufgrund der Zielpose und der bekannten Position der Garage eine ungefähre Prädiktion der Verbindungsbeeinträchtigungen zu den verschiedenen Satelliten getroffen werden. Tritt diese Prädiktion mit einer vorgebbaren erlaubten Abweichung auf, kann der Parkplatz valide als überdachter (Garagen-)Parkplatz angesehen werden.

Gemäß einer vorteilhaften Weiterbildung ist die Auswerteeinheit dazu ausgelegt, im Zusammenwirken mit der Vorhersageeinheit zu ermitteln, wie weit das Kraftfahrzeug bereits in das Bauwerk, insbesondere in eine Garage, eingefahren ist. Somit ist eine Schätzung möglich, wie tief das Kraftfahrzeug bereits in der Garage steht. Idealerweise werden dafür möglichst viele globale Navigationssatellitensysteme (GNSS) mit den jeweils verfügbaren Satelliten kombiniert, um eine möglichst große Anzahl an Satelliten zur Verfügung zu haben und somit eine sehr hohe Genauigkeit zu erzielen. Bei der Nutzung von drei verschiedenen globalen Navigationssatellitensystemen ergeben sich bereits mindestens zwölf sichtbare Satelliten.

Gemäß einer weiteren vorteilhaften Ausführungsform ist die Auswerteeinheit dazu ausgelegt, nach einem vollständigen Einfahren des Kraftfahrzeugs durch eine Einfahrtsöffnung des Bauwerks die Höhe der Einfahrtsöffnung zumindest näherungsweise zu ermitteln. Insbesondere kann es sich dabei um die lichte Höhe der Einfahrtsöffnung handeln. In idealen Fällen und bei der Verwendung von verschiedenen globalen Navigationssatellitensystemen wäre somit sogar eine ungefähre Schätzung der Höhe der Garageneinfahrt realisierbar, in der Regel erst nach einem abgeschlossenen Einparkvorgang. Die Genauigkeit einer solchen Schätzung hängt insbesondere von der Anzahl der empfangbaren Satelliten ab, sowie in besonderer Weise von einer günstigen Konstellation der Satelliten zueinander, beispielsweise mehrere Satelliten, die entgegen der Einfahrtrichtung des Bauwerks (Garage) unter unterschiedlichen Höhenwinkeln (Elevation) sichtbar sind. Auf diese Weise gewonnene Daten über eine Höhe einer Einfahrtsöffnung eines Bauwerks, beispielsweise eines überdachten Parkplatzes (Parkdeck, Parkhaus) können beispielsweise über eine geeignete Datenverbindung für andere Kraftfahrzeuge bereitgestellt werden. So können für den Eintrag in entsprechendes, zu Navigationszwecken geeignetes Kartenmaterial, beispielsweise Google Maps, für die betreffenden Bauwerke zugehörige Attribute bereitgestellt werden, insbesondere in Form einer maximalen Durchfahrtshöhe, wodurch Fahrer anderer Kraftfahrzeuge im Voraus erkennen können, ob eine Ansteuerung eines derartigen Bauwerks zu Parkzwecken mit ihrem derzeit benutzen Fahrzeug überhaupt möglich ist. Eine Bereitstellung derartiger Durchfahrtshöhendaten kann bevorzugt dann erfolgen, wenn entsprechend gut geeignete Satellitenkonstellationen vorliegen. Alternativ oder zusätzlich kann vorgesehen sein, dass ein jeweiliger Messwert (Schätzwert) mit einem Bewertungsfaktor übertragen wird, welcher angibt, mit welcher Zuverlässigkeit bzw. Genauigkeit dieser Messwert ermittelt wurde. Auf diese Weise können anfänglich vergleichsweise ungenaue Durchfahrtshöhen-Messwerte im Laufe der Zeit optimiert und durch unterschiedliche Kraftfahrzeuge mit möglicherweise unterschiedlichen Montagehöhen der für den Empfang der Navigations-Signale verwendeten Antenne verifiziert werden.

Gemäß einer weiteren vorteilhaften Ausführungsform ist die Auswerteeinheit dazu ausgelegt, das Einfahren in einen Tunnel zu erkennen.

Bevorzugt können in der ersten Zone diejenigen Satelliten zugeordnet sein, welche in Fahrtrichtung liegen, insbesondere tief über dem Horizont gelegene Satelliten. Der zweiten Zone können seitlich zu dem Kraftfahrzeug gelegene Satelliten zugewiesen sein, also insbesondere quer zur Fahrtrichtung liegende Satelliten. Der dritten Zone können bevorzugt entgegen zur Fahrtrichtung gelegene Satelliten zugeordnet sein. Ebenso kann auch eine vierte Zone definiert sein, welche rückwärtig zu dem Kraftfahrzeug und tief über dem Horizont gelegene Satelliten zugewiesen sind. Somit können für das Einfahren beispielsweise in einen Tunnel vorgebbare Muster definiert werden, nach denen sich die Verbindungen zu den Satelliten verändern. Beispielsweise ist zu erwarten, dass zunächst die Verbindung zu Satelliten beeinträchtigt wird, deren Position in Fahrtrichtung tief über dem Horizont liegen (erste Zone). Als nächstes wird die Verbindung zu seitlichen Satelliten und ebenfalls zu Satelliten, die höher stehen, beeinträchtigt, diese können der zweiten Zone zugeordnet sein. Als letztes ist die Verbindung zu Satelliten, deren Position relativ zum Fahrzeug entgegen der Fahrtrichtung liegt, betroffen (dritte Zone). Noch später ist die Verbindung zu Satelliten betroffen, die zusätzlich tief über dem Horizont stehen (vierte Zone). Die Erfindung ist insbesondere auch noch dann einsetzbar, wenn zu der Fahrzeugposition keine Kartendaten bekannt sind, welche beispielsweise die Position eines Bauwerks, insbesondere eines Tunnels, in Bezug auf die Position des Kraftfahrzeugs zur Verfügung stellen.

Bevorzugt kann ein Kraftfahrzeug ein erfindungsgemäßes Positionsbestimmungssystem umfassen, woraus sich ein erfindungsgemäßes Kraftfahrzeug ergibt.

Gemäß einer vorteilhaften Weiterbildung weist das Kraftfahrzeug einen Umgebungssensor mit horizontaler Erfassungscharakteristik zur Bereitstellung von Umgebungsdaten auf, wobei der Umgebungssensor dazu ausgelegt ist, in horizontaler Richtung zu dem Kraftfahrzeug liegende Objekte zu erfassen, und wobei die Auswerteeinheit dazu ausgelegt ist, Sichtlinien und Signalstärken der jeweiligen Satelliten mit den Umgebungsdaten zu fusionieren. Bei dem Umgebungssensor kann es sich bevorzugt um eine Kamera, insbesondere eine Frontkamera handeln. Alternativ oder zusätzlich kann der Umgebungssensor einen Radarsensor umfassen. Derartige Sensoren sind üblicherweise dazu ausgelegt, in horizontaler Richtung zu dem Kraftfahrzeug liegende Objekte zu erfassen. Zusätzliche Sensoren, die nur dazu vorhanden sind, die Decke zu detektieren, verursachen Mehrkosten und bringen meist nur in wenigen Situationen Vorteile. Wird auf solche vertikal ausgerichtete Sensoren verzichtet, kann gemäß dem Stand der Technik keine Decke erkannt werden, ein Garagenparkplatz also auch nach dem Einparkvorgang nicht validiert werden. Herkömmliche abstandgebende Sensoren können regelmäßig Fehldetektionen liefern, wenn das Fahrzeug beispielsweise unter einem Baum geparkt wird.

Durch das Fusionieren von Umgebungsdaten, welche von einem Umgebungssensor mit einer horizontalen Erfassungscharakteristik, insbesondere mit einer im Wesentlichen horizontalen Erfassungscharakteristik ausgebildet ist, und bereits zur Verwendung mit anderen Systemen in dem Kraftfahrzeug, beispielsweise einem Fahrspurassistent eingerichtet ist, kann durch eine kombinierte Auswertung der Umgebungsdaten mit den Sichtlinien zu den Satelliten und dem jeweiligen zeitlichen Verlauf der Signalstärke der jeweiligen Navigations-Signale die Genauigkeit der Detektion eines überdachten Bereichs weiter erhöht werden. Mittels einer Kamera kann so zum Beispiel ein Parkplatz unter einem Baum, bei dem bereits auf den beiden Nachbarparkplätzen links und rechts neben der freien Parklücke zwei deutlich höhere Fahrzeuge (beispielsweise Lieferwagen/Kleintransporter) geparkt sind, deren Höhe deutlich größer ist als die Höhe des Fahrzeugs, welches die freie Parklücke ansteuert, von einer überdachten Garage unterschieden werden.

Die Erfindung geht weiterhin aus von einem Verfahren zur Ermittlung, ob sich ein Kraftfahrzeug in einem durch ein Deckenelement eines Bauwerks überdachten Bereich befindet, durch Empfangen von Navigations-Signalen, einer Mehrzahl von Satelliten eines oder mehrerer globaler Navigations-Satelliten-Systeme und Erfassen einer seitlichen Veränderung der Signalstärke der jeweiligen Navigations-Signale. Erfindungsgemäß wird das Verfahren weitergebildet durch Ermitteln von Sichtlinien von dem Kraftfahrzeug zu dem jeweiligen Satelliten, deren Navigations-Signale empfangen wurden, Auswerten der zeitlichen Veränderung der Signalstärke der jeweiligen Navigations-Signale in Bezug auf die jeweils ermittelte Sichtlinie, und Ermitteln eines Einfahrens des Kraftfahrzeugs in den überdachten Bereich durch Korrelation einer Fahrbewegung des Kraftfahrzeugs mit den jeweiligen Sichtlinien.

Die für das erfindungsgemäße Positionsbestimmungssystem beschriebenen Vorteile und bevorzugten Ausführungsformen gelten auch für das erfindungsgemäße Kraftfahrzeug. Ebenso gelten die für die erfindungsgemäßen Vorrichtungen beschriebenen Vorteile und Merkmale sowie Ausführungsformen gleichermaßen für entsprechende Verfahren und umgekehrt. Folglich können für Vorrichtungsmerkmale entsprechende Verfahrensmerkmale und umgekehrt vorgesehen sein.

Weitere Vorteile und Merkmale ergeben sich anhand der folgenden Beschreibung von Ausführungsbeispielen unter Berücksichtigung der beigefügten Figuren. In den Figuren bezeichnen gleiche Bezugszeichen gleiche Merkmale und Funktionen.

Es zeigen:
- Fig. 1: in vereinfachter schematischer Darstellung ein Kraftfahrzeug bei der Einfahrt in eine Garage gemäß einem ersten Ausführungsbeispiel der Erfindung,
- Fig. 2: in vereinfachter schematischer Darstellung ein Kraftfahrzeug bei der Einfahrt in einen Tunnel gemäß einem zweiten Ausführungsbeispiel der Erfindung, und
- Fig. 3: in vereinfachter schematischer Darstellung die Einfahrt des Kraftfahrzeugs in den Tunnel gemäß der Darstellung der Fig. 2 aus einer seitlichen Perspektive.

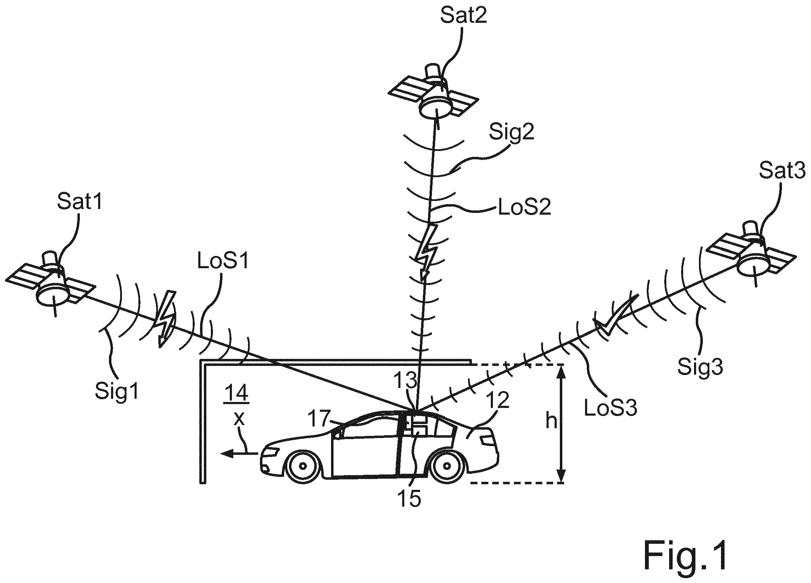

Bei der Einfahrt eines Kraftfahrzeugs 12 in eine Garage 14 führt das Kraftfahrzeug 12 eine Fahrbewegung x durch. Das Kraftfahrzeug 12 weist eine Empfangseinheit 13 auf, welche zum Empfang von Navigations-Signalen ausgelegt ist. Gemäß der Darstellung in der Fig. 1 stehen drei Satelliten, Sat1, Sat2 und Sat3, zur Verfügung, wobei ein erster Satellit Sat1 ein erstes Navigations-Signal Sig1 aussendet, ein zweiter Satellit Sat2 ein zweites Navigations-Signal Sig2 aussendet und ein dritter Satellit Sat3 ein drittes Navigations-Signal Sig3 aussendet. Die direkte Verbindungslinie zwischen dem ersten Satelliten Sat1 und einer Antenne der Empfangseinheit 13 bildet eine erste Sichtlinie LoS1 (englisch: line-of-sight), die Verbindungslinie zwischen den zweiten Satelliten Sat2 und der Antenne bildet eine zweite Sichtlinie LoS2. In der Darstellung gemäß der Fig. 1 sind die erste Sichtlinie LoS1 und die zweite Sichtlinie LoS2 unterbrochen, es erfolgt hier eine Abschattung des ersten Navigations-Signals Sig1 und des zweiten Navigations-Signals Sig2 jeweils durch die Decke der Garage 14. Die Verbindungslinie zwischen dem dritten Satelliten Sat3 und der Antenne der Empfangseinheit 13 bildet eine dritte Sichtlinie LoS3, wobei gemäß der Darstellung der Fig. 1 eine direkte Sichtverbindung zwischen der Antenne der Empfangseinheit 13 und dem dritten Satelliten Sat3 durch die offene Garagenzufahrt ermöglicht ist. Somit ist das dritte Navigations-Signal Sig3 in der dargestellten Situation durch die Empfangseinheit 13 empfangbar, wohingegen das erste Navigations-Signal Sig1 und das zweite Navigations-Signal Sig2 nicht empfangbar sind, weil diese durch das Garagendach in Form der Decke der Garage 14 abgeschirmt werden.

Zweckmäßigerweise wird daher die erste Sichtlinie LoS1 und die zweite Sichtlinie LoS2 bereits vor der Einfahrt des Kraftfahrzeugs 12 in die Garage 14 ermittelt, wobei für einen vorgebbaren Zeitraum nach dem Abreißen der jeweiligen Signalverbindung die jeweilige Sichtlinie als konstant angenommen wird. Für die Detektion einer Einfahrt des Kraftfahrzeugs 12 in den überdachten Bereich in Form der Garage 14 ist diese vereinfachende Betrachtung völlig ausreichend aufgrund der großen Entfernung der Satelliten Sat1, Sat2, Sat3 und deren Umlaufzeit um die Erde in Höhe von ca. 12 Stunden.

Bei der Annäherung des Kraftfahrzeugs 12 an die Garage 14 erfolgt somit zunächst eine Unterbrechung des ersten Navigations-Signals Sig1 zu dem ersten Satelliten Sat1, welcher in Fahrtrichtung, das heißt in Richtung der Fahrbewegung x des Kraftfahrzeugs 12, vorausliegend angeordnet ist. Aufgrund der hohen Entfernung der Satelliten Sat1, Sat2, Sat3 zu dem Kraftfahrzeug 12 und dem vergleichsweise kurzen Betrachtungszeitraum des Einfahrvorgangs des Kraftfahrzeugs 12 in die Garage 14 sind die Sichtlinien praktisch als konstant ausgehend von dem Kraftfahrzeug 12 zu betrachten und somit zusammen mit dem Kraftfahrzeug 12 in horizontaler Richtung parallel verschiebbar, so dass die erste Sichtlinie LoS1 bei Annäherung des Kraftfahrzeugs 12 an die Garage 14 als erste Sichtlinie von der Decke der Garage 14 unterbrochen wird. Die zweite Sichtlinie LoS2, zu dem zweiten Satelliten Sat2, der nahezu im Zenit senkrecht über dem Kraftfahrzeug 12 steht, wird als nächstes unterbrochen, wenn die Antenne der Empfangseinheit 13 die Öffnung der Garage 14 passiert. Die Signalverbindung zu dem dritten Satelliten Sat3 wäre gemäß der Darstellung der Fig. 1 ebenso unterbrochen, wenn das Kraftfahrzeug 12 die verbleibende freie Reststrecke innerhalb der Garage 14 von der Vorderkante des Kraftfahrzeugs 12 zu der Rückwand der Garage 14 zurückgelegt hat.

Unter der Voraussetzung, dass weitere Satelliten in der Nähe des dritten Satelliten Sat3 unterwegs sind (in der Fig. 1 nicht dargestellt), kann aus den unterschiedlichen Höhenwinkeln (Elevation) zu den unterschiedlichen Satelliten eine vergleichsweise genaue Schätzung einer Höhe h der Einfahrtsöffnung der Garage 14 ermöglicht werden. Dies können insbesondere Satelliten von verschiedenen globalen Navigationssatellitensystemen sein (GPS, GLONASS, Galileo).

Die Fahrbewegung x des Kraftfahrzeugs 12 kann auf der Basis unterschiedlicher Fahrzeugparameter definiert sein, beispielsweise auf der Basis einer Fahrzeuglängsachse des Kraftfahrzeugs 12, eines Einschlagwinkels der lenkbaren Räder des Kraftfahrzeugs 12, einer Tangente an die durch das Kraftfahrzeug 12 bei dem Einfahren in die Garage 14 zurückgelegte Bahnkurve oder einer beliebige Kombination mit wahlfreier Gewichtung der einzelnen Parameter.

Das Kraftfahrzeug 12 umfasst neben der Empfangseinheit 14 eine Auswerteeinheit 15. Optional kann eine Vorhersageeinheit 17 vorgesehen sein, welche dazu ausgelegt ist, in Abhängigkeit von einer vorgebbaren Zielpose innerhalb der Garage 14 eine Abnahme der Signalstärke der jeweiligen Navigations-Signale Sig1, Sig2, Sig3 an der Zielpose in Bezug auf die Signalstärke der jeweiligen Navigations-Signale unmittelbar vor dem Beginn der Ansteuerung der Zielpose durch das Kraftfahrzeug 12 vorherzusagen.

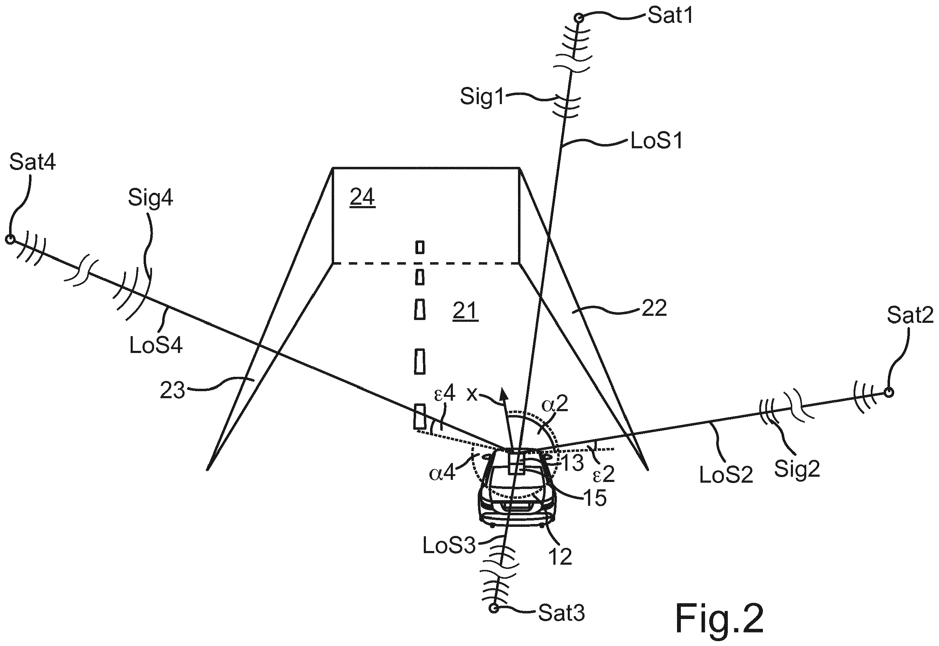

Eine bevorstehende Einfahrt des Kraftfahrzeugs 12 in einen Tunnel 24 ist in der Fig. 2 dargestellt. Das Kraftfahrzeug 12 bewegt sich hierbei auf einer Fahrbahn 21, wobei sich rechts neben der Fahrbahn 21 eine ansteigende erste Seitenwand 22 vor dem Portal des Tunnels 24 befindet und auf der linken Seite ein ansteigende zweite Seitenwand 23.

Neben dem ersten Satelliten Sat1, dem zweiten Satelliten Sat2 und dem dritten Satelliten Sat3 ist in dieser Darstellung außerdem ein vierter Satellit Sat4 empfangbar, der ein viertes Navigations-Signal Sig4 ausstrahlt und mit der Antenne der Empfangseinheit 13 des Kraftfahrzeugs 12 eine vierte Sichtlinie LoS4 bildet. Der erste Satellit Sat1 befindet sich gemäß der Darstellung der Fig. 2 in Bezug auf die Fahrbewegung x des Kraftfahrzeugs 12 voraus, der zweite Satellit Sat2 befindet sich in rechter Position zu der Fahrbewegung x des Kraftfahrzeugs 12, der dritte Satellit Sat3 befindet sich praktisch rückwärtig zu der Fahrbewegung x des Kraftfahrzeugs 12 und der vierte Satellit Sat4 befindet sich zur linken Seite der Fahrbewegung x des Kraftfahrzeugs im Vergleich mit dem zweiten Satelliten Sat2 in weiter voraus liegender Position.

Eine senkrechte Projektion der Sichtlinien LoS1, LoS2, LoS3, LoS4 auf die als horizontal angenommene Fahrbahnebene der Fahrbahn 21 schließt jeweils zur Richtung der Fahrbewegung x des Kraftfahrzeugs 12 einen Azimutwinkel α1, α2, α3, α4 ein. Der Übersichtlichkeit halber ist lediglich der zweite Azimutwinkel α2 und der vierte Azimutwinkel α4 dargestellt, wobei der zweite Azimutwinkel α2 bei dem gewählten Bezugssystem ungefähr 90° beträgt, das heißt der zweite Satellit Sat2 befindet sich gegenüber dem Kraftfahrzeug 12 in einer sogenannten Drei-Uhr-Position. Der vierte Azimutwinkel α4 beträgt in der beispielhaft gewählten Darstellung ca. 300°, somit befindet sich der vierte Satellit Sat4 in einer sogenannten Zehn-Uhr-Position. Gegenüber der Fahrbahnebene der Fahrbahn 21, welche definitionsgemäß als horizontal und damit senkrecht auf dem Zenit stehend angenommen wird, mit anderen Worten also der Zenit die Normalenrichtung zu der Fahrbahnebene stellt, ergeben sich für die einzelnen Sichtlinien LoS1, LoS2, LoS3, LoS4 jeweilige Höhenwinkel (Elevation) ε1, ε2, ε3, ε4. Ebenfalls zur besseren Übersichtlichkeit sind davon lediglich ein zweiter Höhenwinkel ε2 und ein vierter Höhenwinkel ε4 in Bezug auf die horizontale Fahrbahnebene dargestellt in der Fig. 2.

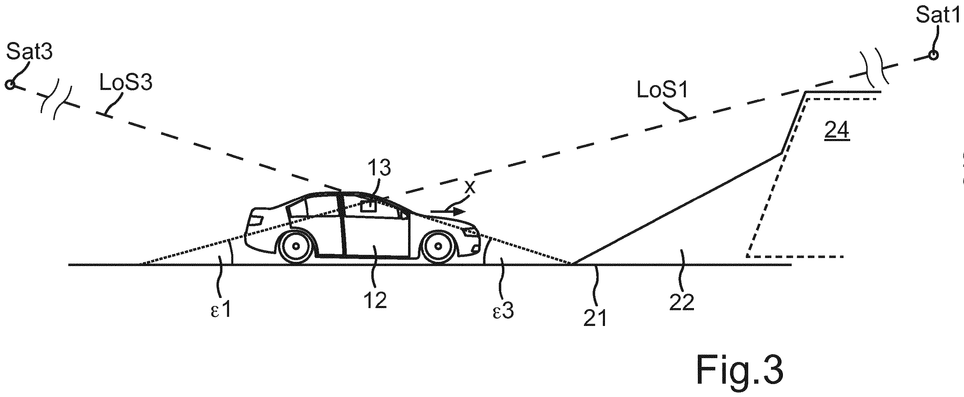

Nähert sich nun das Kraftfahrzeug 12 dem Portal des Tunnels 24, so wird als erstes die erste Sichtlinie LoS1 zu dem ersten Satelliten Sat1 unterbrochen, wodurch das erste Navigations-Signal Sig1 nicht mehr von der Empfangseinheit 13 des Kraftfahrzeugs 12 empfangen werden kann. Im weiteren Verlauf bewegt sich das Kraftfahrzeug 12 zwischen die erste Seitenwand 22 und die zweite Seitenwand 23, welche einen kontinuierlichen Höhenanstieg zum Portal des Tunnels 24 hin aufweisen. In Abhängigkeit von den jeweiligen Höhenwinkeln ε2, ε4 des zweiten Satelliten Sat2 bzw. des vierten Satelliten Sat4 erfolgt nunmehr auch eine Unterbrechung zu einem der beiden genannten Satelliten. Unter der Annahme, dass der vierte Satellit Sat4 tiefer am Horizont steht als der zweite Satellit Sat2, das heißt der vierte Höhenwinkel ε4 kleiner ist als der zweite Höhenwinkel ε2, wird die vierte Sichtlinie LoS4 als nächste Sichtlinie unterbrochen, bevor im weiteren Verlauf auch die zweite Sichtlinie LoS2 unterbrochen wird. Da der dritte Satellit Sat3 nahezu in entgegengesetzter Richtung zu der Fahrtrichtung des Kraftfahrzeugs 12 liegt, also der Fahrbewegung x des Kraftfahrzeugs 12, hängt die Unterbrechung der dritten Sichtlinie LoS3 von einer Höhe des Portals des Tunnels 24 und einem dritten Höhenwinkel ε3 (in der Fig. 2 nicht dargestellt, vergleiche hierzu Fig. 3) ab.

Ist der dritte Höhenwinkel ε3 beispielsweise 80°, so steht der dritte Satellit Sat3 in der Nähe des Zenits und befindet sich damit innerhalb eines kegelförmigen Bereichs mit einem halben Öffnungswinkel von 20° rund um den Zenit herum. Wenn der dritte Höhenwinkel ε3 den Wert 70° annimmt, befindet sich der dritte Satellit Sat3 genau an der Grenze eines derart definierten kegelförmigen Bereichs. In einem solchen Fall wird die Verbindung zu dem dritten Satelliten Sat3 praktisch unmittelbar beim Passieren des Portals des Tunnels 24 durch das Kraftfahrzeug 12 unterbrochen. Befindet sich der dritte Satellit Sat3 jedoch tief am Horizont, das heißt, der dritte Höhenwinkel ε3 weist einen sehr kleinen Wert auf, beispielsweise 5°, so ist auch innerhalb des Tunnels 24 das dritte Navigationssignal Sig3 noch deutlich länger empfangbar, sofern der Tunnel 24 weiterhin einen geradlinigen Verlauf der Fahrbahn 21 aufweist.

Fig. 3 zeigt ergänzend zu der Darstellung der Fig. 2 dieselbe Szene aus einer seitlichen Perspektive. Hierbei ist ein erster Höhenwinkel ε1 zu erkennen, welcher zwischen der ersten Sichtlinie LoS1 zu dem ersten Satelliten Sat1 und der Ebene der Fahrbahn 21 eingeschlossen wird. Vereinfachend wird angenommen, dass die Darstellungsebene der Fig. 3 einer Ebene entspricht, die durch den ersten Satelliten Sat1, die Antenne der Empfangseinheit 13 des Kraftfahrzeugs 12 sowie durch den dritten Satelliten Sat3 definiert wird. Da, wie aus der Fig. 2 erkennbar, der erste Satellit Sat1 nicht exakt voraus in Richtung der Fahrbewegung x liegt und dementsprechend auch der dritte Satellit Sat3 nicht genau in Rückwärtsrichtung zu der Fahrbewegung x liegt, erfolgt somit in der Darstellung der Fig. 3 zur besseren Veranschaulichung der jeweiligen Höhenwinkel ε1 und ε3 die Ansicht auf das Kraftfahrzeug 12 nicht exakt von der Seite, sondern leicht schräg.

In der dargestellten Situation bewegt sich das Kraftfahrzeug 12 gerade soweit auf das Portal des Tunnels 24 zu, dass die Verbindung mit dem ersten Satelliten Sat1 unterbrochen wird. Somit kann die Darstellung der Fig. 3 als Analogie zu der mit Bezug auf die Fig. 1 beschriebenen Situation zu Beginn des Einfahrvorgangs des Kraftfahrzeugs 12 in die Garage 14 betrachtet werden, bei der das erste Navigationssignal Sig1 unterbrochen wird und das zweite Navigationssignal Sig2 und das dritte Navigationssignal Sig3 noch empfangbar sind.

Ein Modell der Verbindungsbeeinträchtigungen kann gemäß der Erfindung verwendet werden, das heißt Verbindungsinformationen werden über die Zeit beobachtet. Für Einfahrten in Garagen/Tunnel lässt sich dann über die zeitliche Abfolge der Verbindungsbeeinträchtigungen und über einen Vergleich mit dem Modell wesentlich sicherer die Überdachung plausibilisieren.

Die Ausführungsbeispiele dienen lediglich der Erläuterung der Erfindung und sind für diese nicht beschränkend. So kann insbesondere die Art der Auswertung der zeitlichen Veränderung der Signalstärke der jeweiligen Navigations-Signale Sig1, Sig2, Sig3, Sig4 in Bezug auf die jeweils ermittelte Sichtlinie LoS1, LoS2, LoS3, LoS4 beliebig gestaltet sein.

Somit wurde voranstehend gezeigt, wie ein Verfahren zur Validierung von Garagenparkplätzen beim gesteuerten Parkvorgang durch Detektion von Decken mittels GNSS ausgestaltet sein kann.

## Patentansprüche

1. Positionsbestimmungssystem für ein Kraftfahrzeug (12) zur Ermittlung, ob sich das Kraftfahrzeug in einem durch ein Deckenelement eines Bauwerks überdachten Bereich (14, 24) befindet, umfassend:
• eine Empfangseinheit (13), welche dazu ausgelegt ist,
- Navigations-Signale (Sig1, Sig2, Sig3, Sig4) einer Mehrzahl von Satelliten (Sat1, Sat2, Sat3, Sat4) eines oder mehrerer globaler Navigationssatellitensysteme zu empfangen und
- eine zeitliche Veränderung der Signalstärke der jeweiligen Navigations-Signale zu erfassen; und
• eine Auswerteeinheit (15), die dazu ausgelegt ist,
- Sichtlinien (LoS1, LoS2, LoS3, LoS4) von dem Kraftfahrzeug zu den jeweiligen Satelliten, deren Navigations-Signale empfangen wurden, zu ermitteln,
- die zeitliche Veränderung der Signalstärke der jeweiligen Navigations-Signale in Bezug auf die jeweils ermittelte Sichtlinie auszuwerten, und
- ein Einfahren des Kraftfahrzeugs in den überdachten Bereich durch Korrelation einer Fahrbewegung (x) des Kraftfahrzeugs mit den jeweiligen Sichtlinien zu ermitteln,
**dadurch gekennzeichnet, dass**
die Auswerteeinheit (15) dazu ausgelegt ist, in Abhängigkeit von den ermittelten Sichtlinien (LoS1, LoS2, LoS3, LoS4) jeden der empfangenen Satelliten (Sat1, Sat2, Sat3, Sat4) jeweils einer Zone aus zumindest einer ersten Zone, einer zweiten Zone und einer dritten Zone zuzuordnen und das Einfahren in das Bauwerk zu erkennen, wenn zunächst die Signalstärke der jeweiligen Navigations-Signale der der ersten Zone zugeordneten Satelliten abnimmt und im weiteren Verlauf die Signalstärke der jeweiligen Navigations-Signale der der zweiten Zone zugeordneten Satelliten abnimmt.

2. Positionsbestimmungssystem nach Anspruch 1,
**dadurch gekennzeichnet,**
**dass** die Auswerteeinheit (15) dazu ausgelegt ist, jeweils einen Azimutwinkel (α1, α2, α3, α4) der Position des jeweiligen Satelliten (Sat1, Sat2, Sat3, Sat4) in Bezug auf das Kraftfahrzeug zu ermitteln, und zur Korrelation der Fahrbewegung (x) mit den jeweiligen Sichtlinien einen jeweiligen Differenzwinkel zwischen dem jeweiligen Azimutwinkel und einem Fahr-Azimutwinkel zu ermitteln, welcher mit der Richtung der Längsachse des Kraftfahrzeugs und/oder der Richtung einer Tangente an eine durch die Fahrbewegung gebildete Bahnkurve korreliert ist.

3. Positionsbestimmungssystem nach einem der vorhergehenden Ansprüche,
**dadurch gekennzeichnet,**
**dass** die Auswerteeinheit (15) dazu ausgelegt ist, das Einfahren des Kraftfahrzeugs in den überdachten Bereich zu erkennen, wenn eine Abnahme der Signalstärke eines Satelliten, welcher sich in Bezug auf die Position des Kraftfahrzeugs auf der Erdoberfläche in der Nähe des Zenits, bevorzugt innerhalb eines kegelförmigen Bereichs mit einem halben Öffnungswinkel von 30° rund um den Zenit herum, insbesondere mit einem halben Öffnungswinkel von 20°, befindet, um einen vorgebbaren Faktor erfasst wird.

4. Positionsbestimmungssystem nach einem der vorhergehenden Ansprüche,
**gekennzeichnet durch**
eine Vorhersageeinheit (17), welche dazu ausgelegt ist, in Abhängigkeit von einer vorgebbaren Zielpose innerhalb des Bauwerks, insbesondere einer Garage, eine Abnahme der Signalstärke der jeweiligen Navigations-Signale an der Zielpose in Bezug auf die Signalstärke der jeweiligen Navigations-Signale unmittelbar vor dem Beginn der Ansteuerung der Zielpose durch das Kraftfahrzeug vorherzusagen.

5. Positionsbestimmungssystem nach Anspruch 4,
**dadurch gekennzeichnet,**
**dass** die Auswerteeinheit (15) dazu ausgelegt ist, im Zusammenwirken mit der Vorhersageeinheit (17) zu ermitteln, wie weit das Kraftfahrzeug (12) bereits in das Bauwerk, insbesondere in eine Garage (14), eingefahren ist.

6. Positionsbestimmungssystem nach einem der vorhergehenden Ansprüche,
**dadurch gekennzeichnet,**
**dass** die Auswerteeinheit (15) dazu ausgelegt ist, nach einem vollständigen Einfahren des Kraftfahrzeugs durch eine Einfahrtsöffnung des Bauwerks die Höhe der Einfahrtsöffnung zumindest näherungsweise zu ermitteln.

7. Positionsbestimmungssystem nach einem der vorhergehenden Ansprüche,
**dadurch gekennzeichnet,**
**dass** die Auswerteeinheit (15) dazu ausgelegt ist, das Einfahren in einen Tunnel zu erkennen.

8. Kraftfahrzeug (12) mit einem Positionsbestimmungssystem nach einem der vorhergehenden Ansprüche.

9. Kraftfahrzeug (12) nach Anspruch 8,
**gekennzeichnet durch**
einen Umgebungssensor mit horizontaler Erfassungscharakteristik zur Bereitstellung von Umgebungsdaten, wobei der Umgebungssensor dazu ausgelegt ist, in horizontaler Richtung zu dem Kraftfahrzeug liegende Objekte zu erfassen, und wobei die Auswerteeinheit dazu ausgelegt ist, Sichtlinien und Signalstärken der jeweiligen Satelliten (Sat1, Sat2, Sat3, Sat4) mit den Umgebungsdaten zu fusionieren und die Umgebungsdaten mit den Sichtlinien zu den Satelliten und dem jeweiligen zeitlichen Verlauf der Signalstärke der jeweiligen Navigations-Signale kombiniert auszuwerten.

10. Verfahren zur Ermittlung, ob sich ein Kraftfahrzeug (12) in einem durch ein Deckenelement eines Bauwerks überdachten Bereich (14, 24) befindet, durch:
- Empfangen von Navigations-Signalen (Sig1, Sig2, Sig3, Sig4) einer Mehrzahl von Satelliten (Sat1, Sat2, Sat3, Sat4) eines oder mehrerer globaler Navigationssatellitensysteme, und
- Erfassen einer zeitlichen Veränderung der Signalstärke der jeweiligen Navigations-Signale,
- Ermitteln von Sichtlinien (LoS1, LoS2, LoS3, LoS4) von dem Kraftfahrzeug zu den jeweiligen Satelliten, deren Navigations-Signale empfangen wurden,
- Auswerten der zeitlichen Veränderung der Signalstärke der jeweiligen Navigations-Signale in Bezug auf die jeweils ermittelte Sichtlinie, und
- Ermitteln eines Einfahrens des Kraftfahrzeugs in den überdachten Bereich durch Korrelation einer Fahrbewegung (x) des Kraftfahrzeugs mit den jeweiligen Sichtlinien,
**dadurch gekennzeichnet, dass**
eine Auswerteeinheit (15) in Abhängigkeit von den ermittelten Sichtlinien (LoS1, LoS2, LoS3, LoS4) jeden der empfangenen Satelliten (Sat1, Sat2, Sat3, Sat4) jeweils einer Zone aus zumindest einer ersten Zone, einer zweiten Zone und einer dritten Zone zuordnet und das Einfahren in das Bauwerk erkennt, wenn zunächst die Signalstärke der jeweiligen Navigations-Signale der der ersten Zone zugeordneten Satelliten abnimmt und im weiteren Verlauf die Signalstärke der jeweiligen Navigations-Signale der der zweiten Zone zugeordneten Satelliten abnimmt.

## Claims

1. Position determination system for a motor vehicle (12) for determining whether the motorvehicle is in an area (14, 24) covered by a roof element of a building, comprising:
• a receiving unit (13), which is designed
- to receive navigation signals (Sig1, Sig2, Sig3, Sig4) from a plurality of satellites (Sat1, Sat2, Sat3, Sat4) of one or more global navigation satellite systems, and
- to detect a temporal change of the signal strength of the respective navigation signals; and
• an evaluation unit (15), which is designed
- to determine lines of sight (LoS1, LoS2, LoS3, LoS4) from the motor vehicle to the respective satellites whose navigation signals have been received,
- to evaluate the temporal change of the signal strength of the respective navigation signals in relation to the respectively determined lines of sight, and
- to determine an entry of the motor vehicle into the covered area by correlation of a driving movement (x) of the motor vehicle with the respective lines of sight,
**characterised in that**
the evaluation unit (15) is designed to allocate, depending on the determined lines of sight (LoS1, LoS2, LoS3, LoS4), respectively to each of the received satellites (Sat1, Sat2, Sat3, Sat4) a zone comprising at least a first zone, a second zone and a third zone, and to recognise the entry of the motor vehicle into the building if firstly the signal strength of the respective navigation signals of the satellites associated with the first zone decreases and subsequently the signal strength of the respective navigation signals of the satellites associated with the second zone decreases.

2. Position determination system according to claim 1,
**characterised in that**
the evaluation unit (15) is designed so as to determine in each case an azimuth angle (α1, α2, α3, α4) of the position of the respective satellite (Sat1, Sat2, Sat3, Sat4) in relation to the motor vehicle, and to determine for the correlation of the driving movement (x) with the respective lines of sight a respective difference angle between the respective azimuth angle and a driving azimuth angle, which is correlated with the direction of the longitudinal axis of the motor vehicle and/or the direction of a tangent to a trajectory traced out by the driving movement.

3. Position determination system according to any one of the preceding claims,
**characterised in that**
the evaluation unit (15) is designed to recognise the entry of the motor vehicle into the covered area when a decrease of the signal strength of a satellite, which in relation to the position of the motor vehicle on the earth's surface is located in the vicinity of the zenith, preferably within a conical region with a half opening angle of 30° around the zenith, in particular with a half opening angle of 20°, is detected by a predeterminable factor.

4. Position determination system according to any one of the preceding claims,
**characterised by**
a prediction unit (17), which is designed to predict, depending on a predeterminable target position within the building, in particular a garage, a decrease of the signal strength of the respective navigation signals at the target position in relation to the signal strength of the respective navigation signals immediately before the motor vehicle starts to drive towards the target position.

5. Position determination system according to claim 4,
**characterised in that**
the evaluation unit (15) is designed to determine, in cooperation to the prediction unit (17), how far the vehicle (12) has already driven into the building, in particular into a garage (14).

6. Position determination system according to any one of the preceding claims,
**characterised in that**
the evaluation unit (15) is designed to determine at least approximately, after the motor vehicle has completely driven through a drive entrance of the building, the height of the said entrance.

7. Position determination system according to any one of the preceding claims,
**characterised in that**
the evaluation unit (15) is designed to recognise if the motor vehicle drives into a tunnel.

8. Motor vehicle (12) with a position navigation system according to any one of the preceding claims.

9. Motor vehicle (12) according to claim 8,
**characterised by**
an environment sensor with horizontal acquisition characteristics for providing environment data, wherein the environment sensor is designed to detect objects lying in the horizontal direction relative to the motor vehicle, and wherein the evaluation unit is designed to combine lines of sight and signal strengths of the respective satellites (Sat1, Sat2, Sat3, Sat4) with the environment data and to evaluate in a combined manner the environment data with the lines of sight to the satellites and the respective temporal change of the signal strength of the respective navigation signals.

10. Method for determining whether a motor vehicle (12) is located in an area (14, 24) covered by a roof element of a building, by:
- receiving navigation signals (Sig1, Sig2, Sig3, Sig4) from a plurality of satellites (Sat1, Sat2, Sat3, Sat4) of one or more global navigation satellite systems, and
- detecting a temporal change of the signal strength of the respective navigation signals,
- determining lines of sight (LoS1, LoS2, LoS3, LoS4) from the motor vehicle to the respective satellites whose navigation signals have been received,
- evaluating the temporal change of the signal strength of the respective navigation signals in relation to the respectively determined line of sight, and
- determining an entry of the motor vehicle into the covered region by correlation of a driving movement(s) of the motor vehicle with the respective lines of sight,
**characterised in that**
an evaluation unit (15) allocates, depending of the determined lines of sight (LoS1, LoS2, LoS3, LoS4), to each of the received satellites (Sat1, Sat2, Sat3, Sat4) respectively a zone comprising at least a first zone, a second zone and a third zone, and recognises the entry of a motor vehicle into the building if firstly the signal strength of the respective navigation signals of the satellites associated with the first zone decreases and subsequently the signal strength of the respective navigations signals of the satellites associated with the second zone decreases.

## Revendications

1. Système de détermination de position pour un véhicule automobile (12) afin de déterminer si le véhicule automobile se trouve dans une zone (14, 24) couverte par un élément de plafonnage d'un bâtiment, comprenant :
• une unité de réception (13) qui est aménagée pour :
- recevoir des signaux de navigation (Sig1, Sig2, Sig3, Sig4) d'une pluralité de satellites (Sat1, Sat2, Sat3, Sat4) d'un ou plusieurs systèmes de satellites de navigation et
- détecter une variation temporaire de l'intensité des signaux de navigation respectifs ; et
• une unité d'évaluation qui est aménagée pour :
- déterminer des lignes visuelles (LoS1, LoS2, LoS3, LoS4) du véhicule automobile aux satellites respectifs desquels les signaux de navigation ont été reçus,
- évaluer la variation temporaire de l'intensité des signaux de navigation respectifs par rapport à la ligne visuelle respectivement déterminée et
- déterminer une mise en route du véhicule automobile dans la zone couverte par corrélation d'un mouvement de marche (x) du véhicule automobile avec les lignes visuelles respectives,
**caractérisé en ce que** :
l'unité d'évaluation (15) est aménagée pour affecter, en fonction des lignes visuelles déterminées (LoS1, LoS2, LoS3, LoS4), chacun des satellites reçus (Sat1, Sat2, Sat3, Sat4) respectivement à une zone parmi au moins une première zone, une deuxième zone et une troisième zone et reconnaître la mise en route dans le bâtiment si tout d'abord l'intensité des signaux de navigation respectifs des satellites affectés à la première zone diminue et que, ensuite, l'intensité des signaux de navigation respectifs des satellites affectés à la deuxième zone diminue.

2. Système de détermination de position selon la revendication 1,
**caractérisé en ce que**
l'unité d'évaluation (15) est aménagée pour déterminer respectivement un angle azimutal (α1, α2, α3, α4) de la position du satellite respectif (Sat1, Sat2, Sat3, Sat4) par rapport au véhicule automobile et déterminer, pour la corrélation de la mise en marche (x) avec les lignes visuelles respectives, un angle de différence respectif entre l'angle azimutal respectif et un angle azimutal de marche, qui est corrélé avec la direction de l'axe longitudinal du véhicule automobile et/ou la direction d'une tangente à une orbite formée par le mouvement de marche.

3. Système de détermination de position selon l'une des revendications précédentes,
**caractérisé en ce que**,
l'unité d'évaluation (15) est aménagée pour reconnaître la mise en marche du véhicule automobile dans la zone couverte si une réduction de l'intensité des signaux d'un satellite, qui se trouve par rapport à la position du véhicule automobile sur la surface terrestre au voisinage du zénith, de préférence dans une zone de forme conique avec un demi-angle d'ouverture de 30° autour du zénith, en particulier avec un demi-angle d'ouverture de 20°, est détectée autour d'un facteur prédéterminable.

4. Système de détermination de position selon l'une des revendications précédentes,
**caractérisé par**
une unité de prédiction (17) qui est élaborée pour prédire, en fonction d'un pose cible prédéterminable au sein du bâtiment, en particulier un garage, une diminution de l'intensité des signaux de navigation respectifs dans la pose cible par rapport à l'intensité des signaux de navigation respectifs directement avant le début du réglage de la pose cible par le véhicule automobile.

5. Système de détermination de position selon la revendication 4,
**caractérisé en ce que**,
l'unité d'évaluation (15) est élaborée pour déterminer en coopération avec l'unité de prédiction (17) de quelle distance s'est déplacé le véhicule automobile (12) déjà dans le bâtiment, en particulier dans un garage (14).

6. Système de détermination de position selon l'une des revendications précédentes,
**caractérisé en ce que**,
l'unité d'évaluation (15) est conçue pour déterminer, après une mise en marche complète du véhicule automobile à travers une ouverture d'entrée du bâtiment, la hauteur de l'ouverture d'entrée au moins par approximation.

7. Système de détermination de position selon l'une des revendications précédentes,
**caractérisé en ce que**,
l'unité d'évaluation (15) est conçue pour reconnaître la mise en marche dans un tunnel.

8. Véhicule automobile (12) avec un système de détermination de position selon l'une des revendications précédentes.

9. Véhicule automobile (12) selon la revendication 8,
**caractérisé par**
un capteur ambiant avec une caractéristique de détection horizontale pour élaborer des données ambiantes, dans lequel le capteur ambiant est élaboré pour déterminer des objets se trouvant dans la direction horizontale par rapport au véhicule automobile et dans lequel l'unité d'évaluation est élaborée pour fusionner des lignes visuelles et des intensités de signaux des satellites respectifs (Sat1, Sat2, Sat3, Sat4) avec les données ambiantes et d'évaluer les données ambiantes avec les lignes visuelles aux satellites et l'évolution temporaire respective de l'intensité des signaux de navigation respectifs en combinaison.

10. Procédé visant à déterminer si un véhicule automobile (12) se trouve dans une zone (14, 24) couverte par un élément de plafonnage d'un bâtiment, consistant à :
- recevoir des signaux de navigation (Sig1, Sig2, Sig3, Sig4) d'une pluralité de satellites (Sat1, Sat2, Sat3, Sat4) d'un ou plusieurs systèmes de satellites de navigation globaux et
- détecter une variation provisoire de l'intensité des signaux de navigation respectifs,
- déterminer des lignes visuelles (LoS1, LoS2, LoS3, LoS4) du véhicule automobile aux satellites respectifs desquels des signaux de navigation ont été reçus,
- évaluer la variation provisoire de l'intensité des signaux de navigation respectifs par rapport à la ligne visuelle respectivement déterminée et
- déterminer une mise en marche du véhicule automobile dans la zone couverte par corrélation d'un mouvement de marche (x) du véhicule automobile avec les lignes visuelles respectives,
**caractérisé en ce que**
une unité d'évaluation (15) affecte, en fonction des lignes visuelles déterminées (LoS1, LoS2, LoS3, LoS4), chacun des satellites reçus (Sat1, Sat2, Sat3, Sat4) respectivement à une zone parmi au moins une première zone, une deuxième zone et une troisième zone et reconnaît la mise en marche dans le bâtiment si tout d'abord l'intensité des signaux de navigation respectifs des satellites affectés à la première zone diminue et que, ensuite, l'intensité des signaux de navigation respectifs des satellites affectés à la deuxième zone diminue.
